# EUROPEAN PATENT APPLICATION

(11) **EP 2 244 323 A1**
(43) Date of publication of application: **27.10.2010**
(21) Application number: 09705610.5
(22) Date of filing: 26.01.2009
(51) Int. Cl.: H01M 8/02, C08G 61/00, C08J 5/22, C08L 65/02, H01B 1/06, H01B 13/00, H01M 8/10

(54) **POLYELECTROLYTE COMPOSITION, METHOD OF PRODUCTION OF SAME, AND FUEL CELL**

(30) Priority: 01.02.2008 JP 2008022614
(71) Applicant: Sumitomo Chemical Company, Limited, Tokyo 104-8260 (JP)
(72) Inventor: YAMASHITA, Yasuhiro, Tsukuba-shi Ibaraki 305-0045 (JP)
(74) Representative: Vossius & Partner
(86) International application number: PCT/JP2009/051672
(87) International publication number: WO 2009/096574

(57) **Abstract**

A polymer electrolyte composition comprising a mixed solvent including a plurality of solvents with boiling points differing from one another, and a block copolymer-type polymer electrolyte comprising a block having an ion-exchange group and a block having substantially no ion-exchange groups, wherein the mixed solvent is a good solvent of the block copolymer-type polymer electrolyte, and a solvent A having the highest boiling point of the solvents included in the mixed solvent is a poor solvent of the block copolymer-type polymer electrolyte and good solvent of the block having the ion-exchange group.

## Description

### TECHNICAL FIELD

The present invention relates to a polymer electrolyte composition and a method for preparing the same, and a polymer electrolyte membrane formed by using the polymer electrolyte composition, and a solid polymer-type fuel cell.

### BACKGROUND ART

A solid polymer-type fuel cell (hereinafter also referred to as a "fuel cell") is a power-generating device to generate electricity using the chemical reaction of a fuel gas (including, for example, hydrogen) with oxygen, and as one of next-generation energy is greatly expected to play a role in the fields of electric housing applications, automotive applications, or the like. The fuel cell includes a basic unit having two catalyst layers and a diaphragm (polymer electrolyte membrane) interposed between the two catalyst layers. As a brief description of a power-generating mechanism of a fuel cell using hydrogen as a fuel gas as a typical fuel cell, hydrogen is ionized on one catalyst layer to produce hydrogen ions, and the produced hydrogen ions are conducted (ion conduction) to the other catalyst layer via the diaphragm, in which the ions are reacted with oxygen to form water. At this time, when the two catalyst layers are connected to an external circuit, electric power is supplied to the external circuit by an electric current. The ionic conductivity of the diaphragm is exhibited by ions movement along with the movement of water through hydrophilic channels in the diaphragm, and thus, in order to exhibit the ion conduction efficiently, it has been required to make the diaphragm be in the wet state. Such a power-generating mechanism makes the diaphragm constituting the fuel cell have its wet state changed according to the starting and stopping of the fuel cells. If the wet state of the diaphragm is changed, the diaphragm is subjected to alternating swelling and shrinkage by water absorption/drying, and thus, a problem occurs that the interface between the catalyst layer and the diaphragm is microscopically damaged. Also, in extreme cases, failure of the fuel cell may also be caused. Therefore, the diaphragm used in fuel cells is required to be capable of exhibiting ion conductivity efficiently at as low in a water absorption ratio as possible to further reduce the swelling and shrinkage (dimensional change from water absorption) according to water absorption and drying.

As a polymer electrolyte used in the diaphragm of the fuel cell, an inexpensive hydrocarbon-based polymer electrolyte having excellent heat resistance has recently attracted attention over conventional fluorine-based polymer electrolytes.

Even among these hydrocarbon-based polymer electrolytes, a block copolymer-type polymer electrolyte including blocks having ion-exchange groups (hereinafter also referred to as "hydrophilic block") and blocks having substantially no ion-exchange groups (hereinafter also referred to as "hydrophobic block") form a phase-separated structure resulting from the repellency between the blocks having different chemical properties from each other, and by controlling the phase-separated structure, the hydrophilic channel can be formed efficiently in the polymer electrolyte membrane, on which various investigations have been thus made.

Among the investigations, there was an attempt to control the phase-separated structure by altering a cast solvent (a solvent for a polymer electrolyte solution containing block copolymer-type polymer electrolytes) used in a solution cast method in the process of preparation of a polymer electrolyte membrane from a block copolymer-type polymer electrolyte using the solution cast method.

For example, in JP-2005-194517-A, it is disclosed that by a solution cast method using a polymer electrolyte solution containing a block copolymer polymer electrolyte in which both of a hydrophilic block and a hydrophobic block have the main chain skeleton covalently bonded with an aromatic ring, and a solvent having no interaction with the hydrophilic block, it is possible to prepare a polymer electrolyte membrane in which the hydrophilic block forms a continuous phase, and the polymer electrolyte membrane exhibits good proton conductivity even under low humidity and at low temperatures.

Further, in JP-2005-248128-A, it is disclosed that in a solution cast method using a varnish composition in which a sulfonic acid group-containing polyarylene is dissolved in a solvent, this solvent is a mixed solvent containing a plurality of kinds of organic solvents, and a polymer electrolyte membrane having a sufficient proton conductivity under an environment of 0°C or lower is obtained by using such a solvent that any of the a plurality of kinds of organic solvent do not singly allow the polyarylene to be dissolved, but can allow the polyarylene to be dissolved when used as a mixed solvent.

In JP-2005-194517-A, a polymer electrolyte membrane is prepared by providing easier moisture absorption so as to exhibit proton conductivity even under low humidity. Such a polymer electrolyte membrane had a disadvantage in terms of water absorption dimensional stability since the water absorption ratio became relatively large, and it could not be said that proton conductivity was sufficient.

The polymer electrolyte membrane obtained in JP-2005-248128-A was not sufficient in the proton conductivity and also, employs a solvent in which a polymer electrolyte (a sulfonic acid group-containing polyarylene) is difficult to dissolve in the varnish composition, and thus, there is a fear that the polymer electrolyte is precipitated during long-term storage of the varnish composition and there is a concern about the storage stability of the varnish composition itself.

Under these circumstances, it is an object of the present invention to provide a polymer electrolyte membrane which can exhibit high ion conductivity while maintaining a practically sufficient water absorption ratio for industrial production of a polymer electrolyte membrane which is useful as a diaphragm for a fuel cell, a polymer electrolyte composition from which a polymer electrolyte membrane can be prepared, and a fuel cell formed by using the polymer electrolyte membrane.

### DISCLOSURE OF INVENTION

The present inventors have made extensive investigations to solve the above-described problems, and as a result, they have completed the present invention. That is, the present invention provides the following <1> and <2>.
<1> A polymer electrolyte composition comprising:
   a mixed solvent including a plurality of solvents with boiling points differing from one another, and
   a block copolymer-type polymer electrolyte comprising a block having an ion-exchange group and a block having substantially no ion-exchange groups,
      wherein the mixed solvent is a good solvent of the block copolymer-type polymer electrolyte, and
   a solvent A having the highest boiling point of the solvents included in the mixed solvent is a poor solvent of the block copolymer-type polymer electrolyte and good solvent of the block having the ion-exchange group.
<2> The polymer electrolyte composition according to <1>, wherein the mixed solvent contains, in addition to the solvent A, a solvent B which is a good solvent of the block copolymer-type polymer electrolyte.
   Further, in the present invention, the "good solvent" and the "poor solvent" are defined as an expression of the solubility at 25°C of the block copolymer-type polymer electrolyte or the block having an ion-exchange group (a hydrophilic block). The good solvent of the block copolymer-type polymer electrolyte refers to a solvent in which the block copolymer-type polymer electrolyte can be dissolved at a concentration of 0.1% by weight or more. Similarly, the good solvent of the hydrophilic block refers to a solvent in which a model polymer can be dissolved at a concentration of 0.1 % by weight or more when the polymer (model polymer) including the same structural unit as the structural unit constituting the block is obtained. Further, if the hydrophilic block consists of a plurality of kinds of structural units, such a solvent refers to a solvent in which the model polymers can be dissolved at a concentration of 0.1 % by weight or more when the polymer (model polymer) including the same plurality of kinds of structural unit as the above block and each structural unit has the same copolymerization ratio as the hydrophilic block is obtained. On the other hand, the poor solvent of the block copolymer-type polymer electrolyte refers to a solvent in which the block copolymer-type polymer electrolyte can be dissolved only at a concentration of less than 0.1% by weight.
   Furthermore, preferred embodiments of the present invention provided the following <3> to <9>.
<3> The polymer electrolyte composition according to <2>, wherein the difference in boiling point between the solvent A and the solvent B is 5°C or more.
<4> The polymer electrolyte composition according to <2> or <3>, wherein the content weight ratio of the solvent A to the solvent B, as represented by solvent A/solvent B, is in the range from 0.1/99.9 to 50.0/50.0.
<5> The polymer electrolyte composition according to any one of <2> to <4>, wherein the ratio of the sum of the weights of the solvent A to the solvent B with respect to the total weight of the mixed solvent is 50% by weight or more.
<6> The polymer electrolyte composition according to any one of <1> to <5>, wherein the mixed solvent contains substantially no water.
<7> The polymer electrolyte composition according to any one of <1> to <6>, wherein the block copolymer-type polymer electrolyte has as the block having an ion-exchange group, a block represented by the following formula (1a): 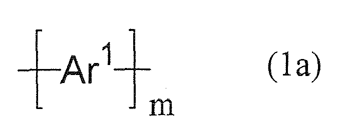 wherein m represents an integer of 5 or more; Ar¹ represents a divalent aromatic group, which may be substituted with a fluorine atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent; Ar¹ has an ion-exchange group bonding to an aromatic ring constituting the main chain directly or via a divalent hydrocarbon group, and
   as the block having substantially no ion-exchange groups, a block represented by the following formula (1b), (2b), or (3b): 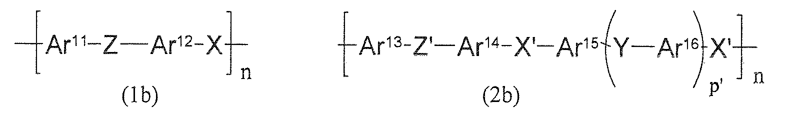 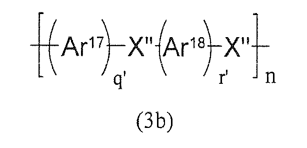 wherein n represents an integer of 5 or more; Ar¹¹ to Ar¹⁸ each independently represents a divalent aromatic group, which may be substituted with an alkyl group having 1 to 10 carbon atoms, an alkoxy group having 1 to 10 carbon atoms, an aryl group having 6 to 10 carbon atoms, an aryloxy group having 6 to 18 carbon atoms, or an acyl group having 2 to 20 carbon atoms; Z and Z' each independently represents a carbonyl group or a sulfonyl group, and X, X', and X" each independently represents an oxy group or a thioxy group; Y represents a direct bond or a group represented by the following formula (1c); p' represents 0, 1, or 2, and in the case where p' is 2, the two of Ar¹⁶ and the two of Y may be the same as or different from each other; q' and r' each independently represents 1, 2, or 3; in the case where q' is 2 or more, a plurality of Ar¹⁷ may be the same as or different from each other; and in the case where r' is 2 or more, a plurality of Ar¹⁸ may be the same as or different from each other; 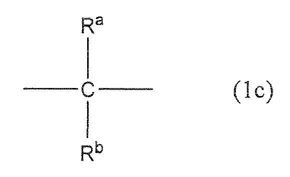 wherein R^{a} and R^{b} each independently represents a hydrogen atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent, and R^{a} and R^{b} may be linked to form a ring together with the carbon atom to which they attach.
<8> The polymer electrolyte composition according to <7>, wherein the block copolymer-type polymer electrolyte has a block represented by the formula (1a) as the block having an ion-exchange group, and
   Ar¹ of the block is a divalent aromatic group in which the ion-exchange group is directly bonded to the aromatic ring constituting the main chain.
<9> The polymer electrolyte composition according to any one of <1> to <8>, wherein the block copolymer-type polymer electrolyte is a block copolymer-type polymer electrolyte having substantially no halogen atoms.
   Further, the present invention provides, as a method for preparing any one of the above-described polymer electrolyte compositions, the following <10>.
<10> A method for preparing the polymer electrolyte composition according to any one of <1> to <9>, the method comprising:
   a preparation step of preparing the mixed solvent including the solvent A, and
   a dissolution step of dissolving the block copolymer-type polymer electrolyte in the mixed solvent obtained in the preparation step.
      Further, the present invention provides the following <11> to <15> formed by using any one of the polymer electrolyte compositions.
<11> A polymer electrolyte membrane prepared using the polymer electrolyte composition according to any one of <1> to <9>.
<12> The polymer electrolyte membrane according to <11>, which has microphase-separated structures in two or more phases comprising a phase in which the density of the block having the ion-exchange group is higher than that of the block having substantially no ion-exchange groups and a phase in which the density of the block having substantially no ion-exchange groups is higher than that of the block having ion-exchange group.
<13> A method for preparing a polymer electrolyte membrane, the method comprising:
   a drying step of applying the polymer electrolyte composition according to any one of <1> to <9> to a supporting substrate to prepare a coat, and drying the coat so that the solvent A may remain in the coat, and
   a washing step of removing the solvent A remaining in the coat resulting from the drying step by washing with a washing solvent.
<14> A membrane-electrode assembly including the polymer electrolyte membrane according to <11> or <12>.
<15> A fuel cell including the membrane-electrode assembly according to <14>.

### BEST MODE FOR CARRYING OUT THE INVENTION

Hereinbelow, the preferred embodiments of the present invention will be described.

### <Block Copolymer-Type Polymer Electrolyte>

The block copolymer-type polymer electrolyte used in the present invention is a polymer electrolyte including a block having an ion-exchange group (a hydrophilic block) and a block having substantially no ion-exchange groups (a hydrophobic block).

"A block having an ion-exchange group" as used herein is represented by the number of the ion-exchange group present in one structural unit constituting the block, means a block having the ion-exchange group with an average number of 0.5 or more, and more preferably an average number of 1.0 or more per the structural unit. On the other hand, "a block having substantially no ion-exchange groups" is expressed by the number of the ion-exchange group present in one structural unit constituting the block, and means a block having the ion-exchange group with an average number of less than 0.1, preferably an average number of 0.05 or less, and more preferably is a block having no ion-exchange groups.

Further, "a block copolymer" in the present invention is a concept encompassing the copolymers in the copolymerization fashion of graft polymerization, in which one of the blocks forms a main chain structure and the other of the blocks forms a side chain structure, in addition to the copolymerization fashions in which the hydrophilic block and the hydrophobic block form a main chain structure.

The block copolymer-type polymer electrolyte used in the present invention has its ion-exchange capacity (hereinafter also referred to as an "IEC") in the range of preferably from 0.5 meq/g to 4.0 meq/g, and more preferably from 1.0 meq/g to 3.0 meq/g. If the IEC of the polymer electrolyte is within the above range, the obtained polymer electrolyte membrane can exhibit a high level of ion conductivity, which is thus preferable.

Further, the block copolymer-type polymer electrolyte used in the present invention preferably has the number of the structural units, respectively contained in the hydrophilic block and the hydrophobic block (the number of the repeating structural units), as expressed by the ratio of the hydrophilic blocks/the hydrophobic blocks, in the range from 10/90 to 90/10. If the ratio of the numbers of the structural units present in both the blocks is within the above range, a phase-separated structure can be more easily formed when a polymer electrolyte membrane is obtained, and by the below-described polymer electrolyte composition of the present invention, a polymer electrolyte membrane having compatibility between a lower water absorption ratio and a high level of ion conductivity can be obtained.

Further, since when a polymer electrolyte membrane is obtained, the membrane can exhibit better heat resistance, the block copolymer-type polymer electrolyte is preferably an aromatic polymer electrolyte. Herein, the aromatic polymer electrolyte is a block in which the hydrophilic block and the hydrophobic block constituting the block copolymer-type polymer electrolyte are linked together by an aromatic group directly bonded therewith, a block in which the blocks are linked together by an aromatic group bonded via a suitable atom or a divalent atom group, or a combination thereof. Further, if the copolymerization fashion of the block copolymer-type polymer electrolyte is graft polymerization, the aromatic polymer electrolyte is a block in which two blocks constituting the main chain structure and the side chain structure of the polymer electrolyte are linked together by an aromatic group directly bonded therewith, a block in which the blocks are linked together by an aromatic group bonded via a suitable atom or atom group, or a combination thereof.

Particularly, if the block copolymer-type polymer electrolyte is an aromatic polymer electrolyte, considering the block in the hydrophilic block as one polymer chain, it is preferable to have an ion-exchange group directly bonded to an aromatic ring forming the main chain.

The ion-exchange group may be any one of a cation-exchange group and anion-exchange group, but it is preferably a cation-exchange group (acidic group) such as sulfonic acid group (-SO₃H), carboxyl group (-COOH), phosphoric acid group (-OP(O)(OH)₂), phosphonic acid group (-P(O)(OH)₂), sulfonylimide group (-SO₂-NH-SO₂-), and the like. The hydrophilic block preferably has a cation-exchange group selected from them, and inter alia, more preferably a cation-exchange group (a strongly acidic group) having an acid dissociation constant pKa of 2 or less, and particularly preferably has sulfonic acid group. The cation-exchange group present in the block copolymer-type polymer electrolyte used in the present invention may be partially or wholly ion-exchanged with metal ions or the like to form salts, but it is preferable that substantially all of them are in the state of free acids. The block copolymer-type polymer electrolyte having hydrophilic blocks in which substantially all of the cation-exchange groups are in the state of free acids is preferable because it allows a good solvent of the hydrophilic blocks as described later to be easily selected, and further, makes the preparation of the polymer electrolyte composition easier. Further, from the viewpoint of the use as a diaphragm for a fuel cell and the like, it is preferable that substantially all of the cation-exchange groups are in the state of free acids.

The block copolymer-type polymer electrolyte used in the present invention is preferably a hydrocarbon-based polymer having halogen atoms, as expressed by an atom weight content ratio of 15% by weight or less. A further preferred block copolymer-type polymer electrolyte is one having substantially no halogen atom, and such a block copolymer-type polymer electrolyte has an advantage that upon working the fuel cell, there is no fear that hydrogen halide is generated and corrodes other members. In addition, the "having substantially no halogen atom" as used herein refers to having halogen atoms of 1% by weight or less, as expressed by the atom weight content ratio.

More specifically, examples of the suitable block copolymer-type polymer electrolyte which is used in the present invention include block copolymer-type polymer electrolytes having a block represented by the formula (1a) as a hydrophilic block and a block represented by the formula (1b), (2b), or (3b) [hereinafter also referred to as "the formulae (1b) to (3b)"] as a hydrophobic block.

Ar¹ in the formula (1a) represents a divalent aromatic group. Examples of the divalent aromatic group include bivalent monocyclic aromatic groups such as 1,3-phenylene, 1,4-phenylene, and the like; divalent condensed aromatic ring groups such as 1,3-naphthalenediyl, 1,4-naphthalenediyl, 1,5-naphthalenediyl, 1,6-naphthalenediyl, 1,7-naphthalenediyl, 2,6-naphthalenediyl, 2,7-naphthalenediyl, and the like; and heterocylic aromatic groups such as pyridinediyl, quinoxalinediyl, thiophenediyl, and the like. A divalent monocyclic aromatic group is preferable.

Further, Ar¹ may be substituted with an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent or an acyl group having 2 to 20 carbon atoms which may have a substituent.

Examples of the alkyl group include a methyl group, an ethyl group, a butyl group, an octyl group, a decyl group, and the like. These alkyl groups may be linear chained, branched, or cyclic. Further, they may be alkyl groups having 1 to 10 carbon atoms in total, in which a hydroxyl group, a cyano group, a halogen atom, or the like is bonded to the above alkyl groups.

Examples of the alkoxy group include a methoxy group, an ethoxy group, a butoxy group, an octyloxy group, a decyloxy group, and the like. These alkoxy groups may be linear chained, branched, or cyclic. Further, they are concepts encompassing the alkoxy groups having 1 to 10 carbon atoms in total, in which a hydroxyl group, a cyano group, a halogen atom, or the like is bonded to the above alkoxy groups.

Examples of the aryl group include a phenyl group, a naphthyl group, and the like. Further, the aryl group may be an aryl group having 6 to 18 carbon atoms in total, in which an alkyl group having 1 to 4 carbon atoms, a cyano group, a halogen atom, or the like is attached to the above aryl group.

Examples of the aryloxy group include a phenoxy group, a naphthoxy group, and the like. Further, the aryloxy group may be an aryloxy group having 6 to 18 carbon atoms in total, in which an alkyl group having 1 to 4 carbon atoms, a cyano group, a halogen atom, or the like is attached to the above aryloxy group.

Examples of the acyl group include an acetyl group, a butyryl group, a decylcarboxyl group, a benzoyl group, and the like. Further, the acyl group may be an acyl group, having 2 to 20 carbon atoms in total, in which a cyano group, a halogen atom, or the like is attached to the above acyl group.

Ar¹ in the block represented by the formula (1a) is one having ion-exchange groups in which [0.5×m] or more ion-exchange groups are present in the block, and it is preferable that Ar¹ in all the structural units in the block represented by the formula (1a) have ion-exchange groups. Also, it is more preferable that Ar¹ has at least one ion-exchange group in the aromatic ring constituting the main chain of the block. The ion-exchange group is more preferably the above-described cation-exchange group, and even more preferably sulfonic acid group.

Ar¹ to Ar¹⁸ in the formulae (1b) to (3b) represents a divalent aromatic group. Examples of the divalent aromatic group include divalent monocyclic aromatic groups such as 1,3-phenylene, 1,4-phenylene, and the like; divalent condensed aromatic ring groups such as 1,3-naphthalenediyl, 1,4-naphthalenediyl, 1,5-naphthalenediyl, 1,6-naphthalenediyl, 1,7-naphthalenediyl, 2,6-naphthalenediyl, 2,7-naphthalenediyl, and the like; and heterocylic aromatic groups such as pyridinediyl, quinoxalinediyl, thiophenediyl, and the like. A divalent monocyclic aromatic group is preferable.

Further, these divalent aromatic groups may be substituted with an alkyl group having 1 to 10 carbon atoms, alkoxy group having 1 to 10 carbon atoms, an aryl group having 6 to 10 carbon atoms, an aryloxy group having 6 to 18 carbon atoms or an acyl group having 2 to 20 carbon atoms.

The block copolymer-type polymer electrolyte used in the present invention is a concept encompassing the block copolymer in which a hydrophilic block and a hydrophobic block are bonded to each other directly or via a suitable atom or a divalent atom group to form a main chain, and graft copolymers in which one of the blocks forms a main chain structure and the other of the blocks form a side chain structure as mentioned above. However, in consideration of easy preparation, the above-described block copolymers are preferable.

Examples of the more preferable block copolymer-type polymer electrolyte include
a block copolymer-type polymer electrolyte including a hydrophilic block represented by the formula (1a) and a hydrophobic block represented by the formula (1b), or a block copolymer-type polymer electrolyte including a hydrophilic block represented by the formula (1a) and a hydrophobic block represented by the formula (2b).

Further, for the block copolymer-type polymer electrolyte, the number m of the repeating structural units of the blocks represented by the formula (1a), and the number n of the repeating structural units of the blocks represented by any one of the formulae (1b) to (3b) both represent an integer of 5 or more, preferably in the range from 5 to 1000, and more preferably in the range from 10 to 500. The polymer electrolyte having the number of the repeating structural units within the above range is excellent in the balance between the ion conductivity and the machine strength and allows easy preparation of each block, which is thus preferable. In addition, the ratio of the numbers of the repeating structural units, as expressed by m/n, as described above, is preferably in the range from 10/90 to 90/10.

Specifically, examples of the suitable block copolymer-type polymer electrolyte include the followings:

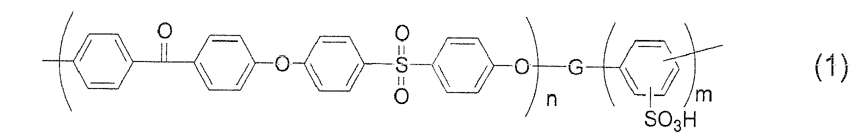

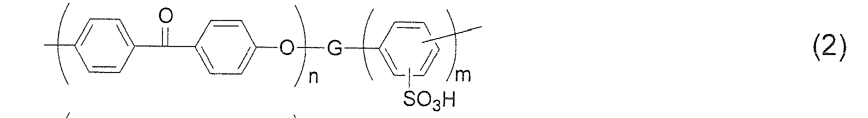

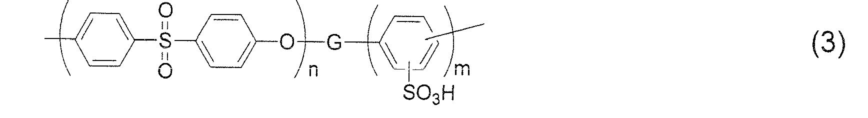

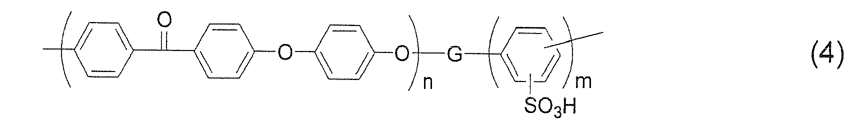

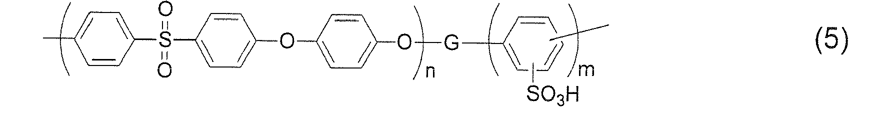

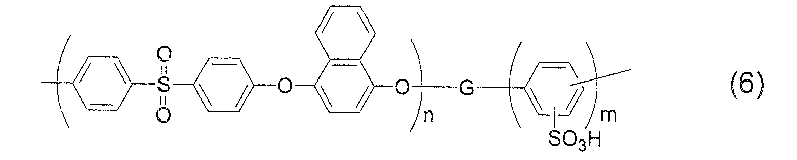

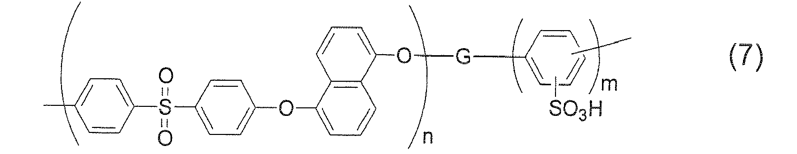

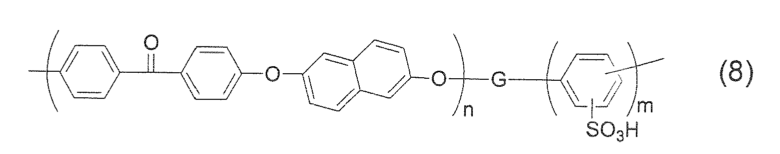

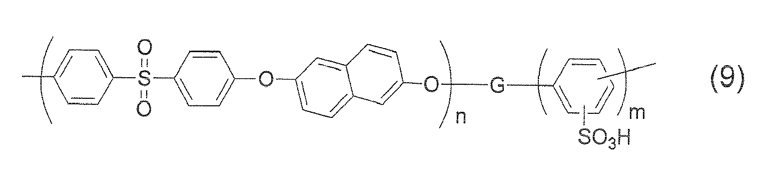

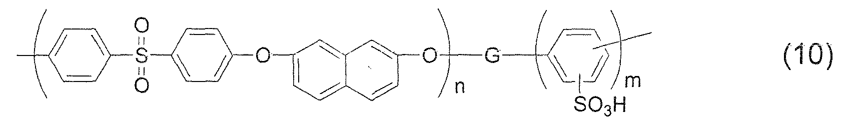

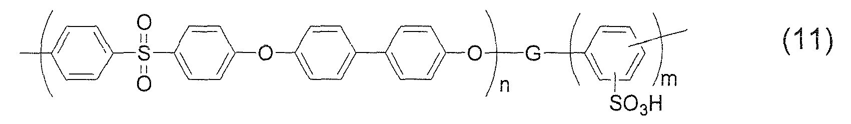

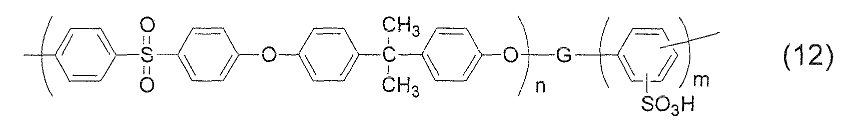

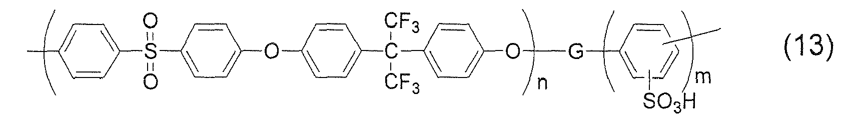

Further, the aforementioned (1) to (13) have blocks consisting of the structural units in parenthesis, the copolymerization fashion is block copolymerization, and G represents an atom or divalent atom group linking two blocks. Specifically, examples of the G include a direct bond, a sulfonyl group, a carbonyl group, an oxygen atom, a sulfur atom, a divalent aromatic group, or a divalent group in combination therewith.

As the more preferable block copolymer-type polymer electrolyte, for example, among the above-exemplified ones, (3), (5), and (9) to (13) are preferable, and (3), (5), (9), (10), (11), and (12) are particularly preferable.

The molecular weight of the block copolymer-type polymer electrolyte used in the present invention is preferably from 5000 to 1000000, and particularly preferably from 15000 to 400000, as expressed by the polystyrene-referenced number average molecular weight. If the block copolymer-type polymer electrolyte composition having a molecular weight within the range is used, when a solution composition which may be used in such a solution cast method (polymer electrolyte solution) is obtained, a solution composition having practical viscosity can be obtained, which is thus preferable.

Such a block copolymer-type polymer electrolyte with a variety of different dimensions of polymer electrolytes can be prepared, for example, by a method for preparing a block copolymer as disclosed in WO2007/043274, and the like.

### <Polymer Electrolyte Composition>

The polymer electrolyte composition of the present invention is a polymer electrolyte composition including the block copolymer-type polymer electrolytes as described above, and a mixed solvent including a plurality of solvents with boiling points differing from one another, wherein
the mixed solvent is a good solvent of the block copolymer-type polymer electrolytes, and
the solvent A having the highest boiling point of the solvents included in the mixed solvent is a poor solvent of the block copolymer-type polymer electrolytes and good solvent of the hydrophilic block.

Further, the boiling point of the solvent in the present invention means a boiling point at 101.3 kPa (1 atm). Further, the solvent which is a poor solvent of the block copolymer-type polymer electrolyte as well as a good solvent of the hydrophilic block is based on the definition as described above, and selected in view of the solubility in the block copolymer-type polymer electrolyte and the solubility in the hydrophilic block.

Further, if the block copolymer-type polymer electrolyte contains a plurality of kinds of blocks as a hydrophilic block, any solvent can be used as a solvent A as long as one kind of the solvents is a good solvent.

Specifically, the boiling point of the solvent A is preferably in the range of 80°C or more and 350°C or less and more preferably in the range of 120°C or more and 300°C or less.

Further, in terms of the solvent A is good solvent of the hydrophilic block, a polar solvent is preferred.

Further, it is preferable that the mixed solvent constituting the polymer electrolyte composition contains a solvent B which is a good solvent of the block copolymer-type polymer electrolyte. The boiling point of the solvent B is lower than that of the solvent A, and the polymer electrolyte composition containing such a solvent B makes it harder to generate the precipitates of the block copolymer-type polymer electrolyte even when the composition is stored for a long period of time, which thus gives an advantage of excellent storage stability. If the solvent B is a good solvent of the block copolymer-type polymer electrolyte, it may be a polar solvent or a non-polar solvent, but since the block copolymer-type polymer electrolyte itself has an ion-exchange group, a polar solvent is preferred.

As such, the polymer electrolyte composition of the present invention preferably contains a solvent A having a highest boiling point and a solvent B having a lower boiling point than that of the solvent A, but the difference in boiling point between the solvent A and the solvent B is preferably 5°C or more. The "difference in boiling point'9 as mentioned herein is determined from the difference (bpa-bpb) whern the boiling point of the solvent A is referred to as bpa, and the boiling point of the solvent B is referred to as bpb. If the difference in boiling point is within the above range, a polymer electrolyte membrane exhibiting extremely high ion conductivity can be obtained by preparing a polymer electrolyte membrane by a solution cast method as described below, which is thus preferable.

In the polymer electrolyte composition of the present invention, the content weight ratio of the solvent A to the solvent B is preferably from 0.1/99.9 to 50.0/50.0, more preferably from 0.5/99.5 to 40/60, and even more preferably from 0.5/99.5 to 20/80, as expressed by the solvent A/solvent B. If the content weight ratio of the solvent A is 0.1 or more, the ion conductivity of the obtained polymer electrolyte membrane is further improved, which is thus preferable, whereas if the content weight ratio of the solvent A is 50.0 or less, the solution stability of the polymer electrolyte composition is maintained high, which is thus preferable. In addition, the solution stability is a concept encompassing storage stability such that the precipitation of the block copolymer-type polymer electrolyte as described above does not occur, as well as stability such that the properties and states, such as increase in the viscosity even when the polymer electrolyte composition is stored for a long period of time, and the like, are hardly changed.

It is preferable that the solvent A and the solvent B are selected from the polar solvents as described above, but it is more preferable that one is an aprotic polar solvent, and the other is a pronic polar solvent.

From the viewpoint of enhancement in the interaction with a hydrophilic block to increase the solubility, the solvent A is preferably a protic polar solvent, and from the viewpoint of increase in the solubility in the entire block copolymer-type polymer electrolyte, the solvent B is preferably a aprotic polar solvent.

Hereinbelow, in the case of the polymer electrolyte including the hydrophilic block represented by the formula (1a) and the hydrophobic block represented by the formula (1b), (2b) or (3b), which is a suitable block copolymer-type polymer electrolyte, examples of the suitable solvent A and solvent B are as follows.

Examples of the solvent A include ethylene glycol (boiling point 198°C), propylene glycol (boiling point 187°C), diethylene glycol (boiling point 746°C), dipropylene glycol (boiling point 232°C), glycerin (boiling point 291°C decomposition), 1, 2-butanediol (boiling point 195°C), 1,3-butanediol (boiling point 208°C), 1,4-butanediol (boiling point 232°C), 2,3-butanediol (boiling point 182°C), 1,5-pentane diol (boiling point 230°C), 1-propanol (boiling point 97°C), 2-propanol (boiling point 82°C), 1-butanol (boiling point 118°C), 2-butanol (boiling point 100°C), cyclohexanol (boiling point 161°C), benzyl alcohol (boiling point 205°C), ethylene carbonate (boiling point 244°C), propylene carbonate (boiling point 242°C), formamide (boiling point 211°C), N-methylformamide (boiling point 183°C), N-methylacetamide (boiling point 205°C), N-ethylacetamide (boiling point 205°C), ethylene glycol monophenyl ether (boiling point 237°C), ethylene glycol monobenzyl ether (boiling point 265°C), ethylene glycol monomethyl ether (boiling point 125°C), ethylene glycol monoethyl ether (boiling point 135°C), propylene glycol monomethyl ether (boiling point 120°C), propylene glycol monoethyl ether (boiling point 132°C), sulfolane (boiling point 285°C), diethylene glycol monoethyl ether (boiling point 202°C), diethylene glycol monobutyl ether (boiling point 231°C), 3-methoxy butanol (boiling point 161°C), and the like. Among these, ethylene glycol, propylene glycol, diethylene glycol, dipropylene glycol, glycerin, 1,2-butanediol, 1,3-butanediol, 1,4-butanediol, 2,3-butanediol, 1,5-pentanediol, 1-propanol, 2-propanol, 1-butanol, 2-butanol, 2-methyl-1-propanol, cyclohexanol, benzyl alcohol, formamide, and N-methylformamide are preferable.

Examples of the solvent B include N-methyl-2-pyrrolidone (boiling point 202°C), N,N-dimethylacetamide (boiling point 166°C), dimethyl sulfoxide (boiling point 189°C), N,N-dimethylformamide (boiling point 153°C), γ-'outyrolactone (boiling point 204°C), tetrahydrofuran (boiling point 65°C), 1,4-dioxane (boiling point 101°C), and the like. These solvents have high solubility in the suitable block copolymer-type polymer electrolyte as exemplified above, and preferable used as the solvent B. Further, the solvent (B) as exemplified herein has high solubility in the hydrophobic block selected from the formulae (1b) to (3b), and as a result, the solubility in the block copolymer-type polymer electrolyte becomes higher.

Examples of the suitable combinations of the solvent A and the solvent B include the combinations shown in Table 1.

**Table 1**

| Combination | solvent A | solvent B | Boiling point difference (°C) |
|---|---|---|---|
| S1 | Diethylene glycol | N-Methyl-2-pyrrolidone | 44 |
| S2 | Dipropylene glycol | N-Methyl-2-pyrrolidone | 30 |
| S3 | Glycerin | N-Methyl-2-pyrrolidone | 89 |
| S4 | 1,4-Butanediol | N-Methyl-2-pyrrolidone | 30 |
| S5 | Formamide | N-Methyl-2-pyrrolidone | 9 |
| S6 | Ethylene glycol | Dimethyl sulfoxide | 9 |
| S7 | Diethylene glycol | Dimethyl sulfoxide | 57 |
| S8 | Dipropylene glycol | Dimethyl sulfoxide | 43 |
| S9 | Glycerin | Dimethyl sulfoxide | 102 |
| S10 | 1,4-Butanediol | Dimethyl sulfoxide | 43 |
| S11 | Formamide | Dimethyl sulfoxide | 22 |
| S12 | Ethylene glycol | N,N-Dimethylacetamide | 32 |
| S13 | Propylene glycol | N,N-Dimethylacetamide | 21 |
| S14 | Diethylene glycol | N,N-Dimethylacetamide | 80 |
| S15 | Dipropylene glycol | N,N-Dimethylacetamide | 66 |
| S16 | Glycerin | N,N-Dimethylacetamide | 125 |
| S17 | 1,4-Butanediol | N,N-Dimethylacetartilde | 66 |
| S18 | Formamide | N,N-Dimethylacetamide | 45 |

A suitable polymer electrolyte composition of the present invention may contain a block copolymer-type polymer electrolyte as exemplified above, and a mixed solvent including the solvent A and the solvent B, but within the range not interfering with the effect of the present invention, other solvents other thane the solvent A and the solvent B may be contained. In this case, as other solvents above, a solvent having a lower boiling point than that of the solvent B is preferable. Further, in this case, the total weight ratio of the solvent A to the solvent B with respect to the total weight of the mixed solvent is preferably 50% by weight or more, more preferably 60% by weight or more, even more preferably 70% by weight or more, and even further preferably 80% by weight, and a mixed solvent substantially consisting of the solvent A and the solvent B is particularly preferable. If the total weight ratio of the solvent A to the solvent B with respect to the total weight of the mixed solvent is within the above range, extremely high ion conductivity is exhibited when a polymer electrolyte membrane is obtained from the block copolymer-type polymer electrolyte.

Further, the weight ratio of the block copolymer-type polymer electrolyte to the mixed solvent in the polymer electrolyte composition may be determined in consideration of the solution cast method as described later, but it is preferably from 1 to 30% by weight, and more preferably from 3 to 25% by weight, suitably as expressed by the weight concentration of the block copolymer-type polymer electrolyte, when determined from [total weight of the block copolymer-type polymer electrolyte]/[total weight of the block copolymer-type polymer electrolyte + total weight of the mixed solvent].

In the polymer electrolyte composition of the present invention, it is particularly preferable that the mixed solvent substantially consists of the solvent A and the solvent B, as described above. The "substantially consists of" as mentioned herein does not exclude unintended impurities contained therein, but it is preferable that water is not contained as an impurities. In other words, it is preferable that the mixed solvent contains substantially no water. Specifically speaking, the weight content ratio of water to the mixed solvent is preferably 5% by weight or less, more preferably 1% by weight or less, and particularly preferably 0.5% by weight or less. Particularly, if the content weight ratio of water to the mixed solvent is 1% by weight or less, it is difficult that the viscosity of the polymer electrolyte composition, or the like is increased, and thus, there is an advantage that the solution stability is excellent. In addition, in order to obtain a polymer electrolyte composition from the mixed solvent having substantially no water, even in the case where other solvents are used in addition to the solvent A and the solvent B, it is necessary not to use water in combination with these solvents, and further, in the block copolymer-type polymer electrolyte, it is necessary to sufficiently eliminate water contained in the block copolymer-type polymer electrolyte so as to satisfy the content weight ratio of water to the mixed solvent. Also, in the solvent A and the solvent B, it is suitable to perform a dehydration treatment by means of a known means.

Further, the polymer electrolyte composition of the present invention may contain an additive that is well-known in the art. Examples of the additive include a plasticizer, a stabilizer, a releasing agent, and the like, which are used for common polymers, and inorganic or organic particles, which are added as a water retaining agent. In the case of using such an additive, it is preferable to select the kind and use amount of the additive within a range not remarkably interfering with the characteristics of the obtained polymer electrolyte membrane. In addition, other polymer electrolyte other than the block copolymer-type polymer electrolyte may be contained. In this case, it is necessary that other polymer electrolyte does not remarkably interfere with the phase-separated structure as described later of the obtained polymer electrolyte membrane.

### <Method for Preparing Polymer Electrolyte Composition>

Next, a suitable method for preparing the polymer electrolyte composition of the present invention will be described.

A suitable polymer electrolyte composition can be prepared by mixing the block copolymer-type polymer electrolyte, the solvent A, and the solvent B, but from the viewpoint of easier preparation of the polymer electrolyte composition, the preparation method of (a), (b), (c), or (d) below is preferable.
(a) A method including mixing the solvent A and the solvent B uniformly to prepare a mixed solvent, and mixing the mixed solvent and the block copolymer-type polymer electrolyte.
(b) A method including mixing the solvent A and the solvent B uniformly to prepare a mixed solvent on one hand, preparing a mixed solution or swollen gel obtained by mixing the solvent B and the block copolymer-type polymer electrolyte on the other hand, and then mixing the solution or swollen gel and the mixed solvent.
(c) A method including mixing the solvent B and the block copolymer-type polymer electrolyte uniformly to prepare a solution, and then mixing the solution and the solvent A.
(d) A method including mixing the solvent A and the block copolymer-type polymer electrolyte to prepare a swollen gel, and then mixing the swollen gel and the solvent B.

Among these, as in (a) or (b), if the solvent A and the solvent B are mixed in advance, increase in the viscosity, or the like hardly occurs upon preparation of the polymer electrolyte composition, and thus, the time taken for dissolution is drastically reduced, which is thus preferable. In particular, in view of reduction of the preparation time, suitable is the preparation method of (a), that is, a method including:
a preparation step of preparing a mixed solvent containing the solvent A (preferably a mixed solvent containing the solvent A and the solvent B), and
a dissolution step of dissolving the block copolymer-type polymer electrolyte in the mixed solvent obtained at the preparation step.

### <Method for Preparing Polymer Electrolyte Membrane>

Next, a method for preparing a diaphragm (polymer electrolyte membrane) for a fuel cell using a solution cast method from the polymer electrolyte composition of the present invention will be described. This solution cast method is a method usually used for the preparation of a polymer electrolyte membrane and particularly useful in the industrial field.

The solution cast method refers to a method including applying the polymer electrolyte composition of the present invention with casting method on a supporting substrate such as a glass substrate, a PET (polyethylene terephthalate) film, and the like to form a coat (cast film-formation), and removing volatile components such as the solvent and the like from the coat to form a polymer electrolyte membrane on the supporting substrate. Also, by removing the supporting substrate by peeling or the like, a polymer electrolyte membrane can be obtained.

From the viewpoint of preparation of a polymer electrolyte membrane having higher ion conductivity while further expressing the effects exhibited by the polymer electrolyte composition of the present invention and maintaining a practically sufficient water absorption ratio,
the method comprising:
a drying step of applying the polymer electrolyte composition to a supporting substrate to prepare a coat, and drying the coat to allow the solvent A to remain in the coat, and
a washing step of removing the solvent A remaining in the coat resulting from the drying step by washing, is preferred. Herein, the weight of the solvent A remaining after the drying step with respect to the weight of the block copolymer-type polymer electrolyte present in the coat is preferably 1% by weight or more, and more preferably 5% by weight or more.

Further, the weight of the solvent A remaining after the drying step with respect to the weight of the block copolymer-type polymer electrolyte present in the coat is preferably 150% or less, and more preferably 100% or less. When the weight of the solvent A remaining after the drying step with respect to the weight of the block copolymer-type polymer electrolyte present in the coat is within the above range, even if the coat obtained after the drying step is peeled off from the supporting substrate, there is an advantage that sufficient strength such that the polymer electrolyte membrane is not damaged is exhibited.

In order to allow the solvent A to easily remain in the coat obtained after the drying step as above, the difference in boiling point between the solvent A and the solvent B as described above is suitably 5°C or more.

Further, in order to allow the solvent A to remain in the coat obtained after the drying step as above, in the case of drying the coat by a heating treatment at the drying step, the temperature condition regarding the heating treatment should be lower than the boiling point of the solvent A, and it is preferable to set the temperature condition such that the temperature is lower than the boiling point of the solvent A by 30°C or more, and specifically, it is more preferable to set the temperature condition regarding the heating treatment such that the temperature is 50°C or more and 130°C or less.

The thickness of the polymer electrolyte membrane thus obtained is not particularly limited, but from the practical point as a diaphragm for a fuel cell, the thickness is preferably from 5 to 300 µm, and more preferably from 7 to 100 µm. If the membrane thickness is 5 µm or more, a polymer electrolyte membrane having practical strength is obtained, which is thus preferable, whereas if the membrane thickness is 300 µm or less, a polymer electrolyte membrane in which the membrane resistance itself becomes smaller is easily obtained, which is thus preferable. The membrane thickness can be controlled by the weight concentration of the block copolymer-type polymer electrolytes in the polymer electrolyte composition, and the coating thickness of the coat on the supporting substrate.

The polymer electrolyte membrane obtained from the polymer electrolyte composition of the present invention is preferably configured to form a phase-separated structure including a phase in which the density of the hydrophilic block is higher than that of the hydrophobic block (hereinafter also referred to as the "hydrophilic block phase") and a phase in which the density of the hydrophobic block is higher than that of the hydrophilic block (hereinafter also referred to as the "hydrophobic block phase"). In particular, the phase-separated structure is suitably a microphase-separated structure.

When observed by a transmission electron microscope (TEM), for example, the microphase-separated structures as mentioned herein refers to a structure such that a hydrophilic block phase (microdomain) and a hydrophobic block phase (microdomain) co-exist, and the domain width, namely, the identity period of each of the microdomain structures is several nm to several hundreds nm. Preferable examples thereof include ones having a microdomain structure of 5 nm to 100 nm.

In addition, in order to further improve the strength, flexibility, or durability of the membrane, the polymer electrolyte composition of the present invention is impregnated in a porous base material to make a composite, thereby obtaining a composite membrane. The method to make a composite can employ a known method.

The porous base material is not particularly limited as long as it satisfies the purpose of use as described above, and examples thereof include a porous membrane, a woven fabric, a non-woven fabric, a fibril, and the like, which can be used without consideration of the shape or materials. The material for the porous base material is preferably an aliphatic polymer, an aromatic polymer, or a fluorine-containing polymer, from the viewpoint of the heat resistance or in consideration of the effect of reinforcing the physical strength.

In this case, the membrane thickness of the porous base material is preferably from 1 to 100 µm, more preferably from 3 to 30 µm, and particularly preferably from 5 to 20 µm, the pore diameter of the porous substrate is preferably from 0.01 to 100 µm, and more preferably from 0.02 to 10 µm, and the porosity of the porous substrate is preferably from 20 to 98%, and more preferably from 40 to 95%.

If the membrane thickness of the porous base material is 1 µm or more, the reinforcing effect after making a composite, or the reinforcing effect of imparting flexibility or durability is more excellent, gas leakage (cross leakage) scarcely occurs. Further, if the membrane thickness is 100 µm or less, the electric resistance is decreased, whereby the obtained composite membrane becomes more excellent as an ion conductive membrane of a solid polymer-type fuel cell. If the pore diameter is 0.01 µm or more, it becomes easier to fill the copolymers of the present invention, whereas if the pore diameter is 100 µm or less, the reinforcing effect for the copolymer is increased. If the porosity is 20% or more, the resistance of the ion conductivity is decreased, whereas if the porosity is 98% or less, the strength of the porous substrate itself is increased, thereby leading to improvement of the reinforcing effect, which is thus preferable.

Moreover, in the case of such a composite membrane, when a portion where the polymer electrolyte membrane of the composite membrane is formed is observed by means of an analysis means by TEM, it is preferable that the phase-separated structure be formed in the portion.

### <Fuel Cell>

Next, a fuel cell formed by using the polymer electrolyte membrane will be described.

The fuel cell of the present invention can be prepared by joining a catalyst layer including a catalyst and a conductive substance to both sides of the polymer electrolyte membrane formed by using the polymer electrolyte composition of the present invention.

Herein, the catalyst is not particularly limited as long as it is capable of activating a redox reaction with hydrogen or oxygen, and a known catalyst can be employed. However, fine particles of platinum or platinum-based alloys are preferably used as a catalyst. Also, the fine particles of platinum or platinum-based alloys are often used while being supported on particular or fibrous carbon such as activated carbon, graphite, and the like.

A catalyst layer can be obtained by mixing platinum or platinum-based alloys supported on carbon (catalyst supported on carbon) with an alcohol solution of a perfluoroalkyl sulfonic acid resin as a polymer electrolyte to give a paste, thereby preparing a catalyst ink, which is applied on a gas diffusion layer and/or polymer electrolyte membrane and dried. As a specific method, for example, a known method such as a method described in J. Electrochem. Soc.: Electrochemical Science and Technology, 1988, 135 (9), 2209, and the like can be used.

As such, by forming the catalyst layer on both sides of the polymer electrolyte membrane of the present invention, a membrane-electrode assembly (MEA) can be obtained. Further, in the preparation of MEA, in the case of forming a catalyst layer on a base material to be a gas diffusion layer, the obtained MEA can be obtained in the form of a membrane-electrode-gas diffusion lawyer assembly provided with both of the gas diffusion layer and the catalyst layer on both sides of the polymer electrolyte membrane. In addition, if the catalyst ink is applied on the polymer electrolyte membrane to form a catalyst layer on the polymer electrolyte membrane, a gas diffusion layer can be further formed on the obtained catalyst layer to obtain a membrane-electrode-gas diffusion layer assembly.

Herein, a catalyst layer can be prepared by transferring the catalyst ink used in the preparation of a catalyst layer to a catalyst composition formed by mixing the catalyst supported on carbon with the polymer electrolyte composition of the present invention.

With respect to the gas diffusion layer, known materials can be employed and porous carbon woven fabric, carbon nonwoven fabric, or carbon paper is preferable since it efficiently transfers a gas as a raw material to the catalyst.

Further, in the preparation of the MEA as described above, the polymer electrolyte membrane may be replaced to a composite membrane formed by using the polymer electrolyte composition of the present invention.

The fuel cell of the present invention prepared in this manner can be used in various modes using hydrogen gas, modified hydrogen gas, or methanol as a fuel.

Hereinafter, the present invention will be described in detail with reference to Examples.

The methods for measuring the physical properties of the membrane, and the like with respect to Examples are shown below.

### (Measurement of Ion-Exchange Capacity)

A polymer electrolyte membrane to be subjected to measurement of the dry weight using a halogen water meter set at a heating temperature of 105°C. Next, the polymer electrolyte membrane was immersed in 5 mL of an aqueous solution of 0.1 mol/L sodium hydroxide and then left for 2 hours after 50 mL of ion-exchanged water was added thereto. Thereafter, 0.1 mol/L of hydrochloric acid was gradually added to the solution in which the polymer electrolyte membrane was immersed to carry out titration, and then the neutralization point was determined. The ion-exchange capacity (unit: meq/g) of the polymer electrolyte membrane was calculated from the dry weight of the polymer electrolyte membrane and the amount of hydrochloric acid required for the neutralization.

### (Measurement of GPC)

The number-average molecular weight (Mn) and the weight-average molecular weight (Mw), expressed in a polystyrene-equivalent, were measured by means of gel permeation chromatography (GPC) under the following condition. In addition, as a mobile phase (eluent), any one of the followings was used for measurement.
[Mobile Phase 1] Dimethylacetamide
   (LiBr was added so as to be 10 mmol/dm³)
[Mobile Phase 2] Dimethylformamide
   (LiBr was added so as to be 10 mmol/dm³)

### (Measurement of Water Absorption Ratio)

The weight increment of a polymer electrolyte membrane in which substantially all of the cation-exchange group were in the free acid state after being immersed in deionized water at 80°C for 2 hours, relative to the weight upon drying the polymer electrolyte membrane, was determined as a percentage relative to the weight upon drying.

### (Measurement of Proton Conductivity)

The membrane resistance was measured by a method described in Shin Jikken Kagaku Kouza (New Experimental Chemical Course) 19, Polymer chemistry (II), 992 p (compiled by The Chemical Society of Japan, Maruzen Co., Ltd.).

However, the cells used were made of carbon while not using platinum electrodes with platinum black, and a terminal of a device for measuring impedance was connected directly into the cell. First, the polymer electrolyte membrane was set in the cell to measure the resistance value, and then, the resistance value was measured again except for the polymer electrolyte membrane. Thus, from the difference between both the values, the membrane resistance was calculated. As the solution to be in contact with the both sides of the polymer electrolyte membrane, 1 mol/L diluted sulfuric acid was used. All of the measurements were performed at 23°C. The proton conductivity was calculated from the membrane thickness upon immersion in diluted sulfuric acid and the resistance value.

### (Synthesis Example 1) Preparation of block copolymer-type polymer electrolyte [Block copolymer 1]

Under argon atmosphere, 142.2 parts by weight of DMSO, 55.6 parts by weight of toluene, 5.7 parts by weight of sodium 2,5-dichlorobenzenesulfonate, 2.1 parts by weight of the following chlorine-terminated polyether sulfone (SUMIKAEXCEL PES 5200P, manufactured by Sumitomo Chemical Co., Ltd.): 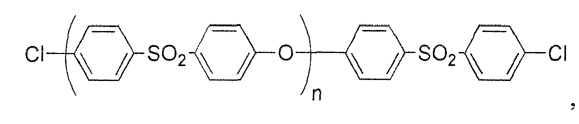 and 9.3 parts by weight of 2,2'-dipyridyl were placed into a flask equipped with an azeotropic distillation apparatus, and stirred. Thereafter, the bath temperature was increased to 100°C and toluene was removed by thermal distillation under reduced pressure to carry out azeotropic dehydration of moisture in the system, and after cooling to 65°C, the pressure was turned to normal pressure. Next, 15.4 parts by weight of bis(1,5-cyclooctadiene) nickel (0) was added thereto, the temperature was increased to 70°C, and the obtained mixture was stirred for 5 hours at the same temperature. After being left to be cooled, the reaction solution was added to a large quantity of methanol to precipitate a polymer, which was then separated by filtration. Thereafter, after washing with 6 mol/L of hydrochloric acid and filtration were repeated several times, filtrate was washed until it became neutral and dried under reduced pressure to obtain the following block copolymer 1 (IEC=2.3 meq/g, Mn=126000, Mw=249000 [mobile phase 1]):

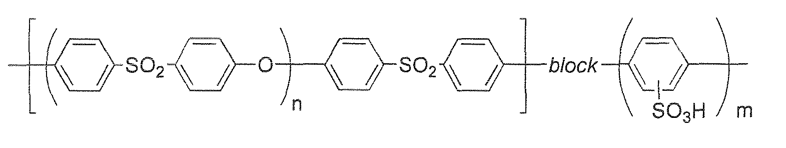

### (Synthesis Example 2) Preparation of block copolymer-type polymer electrolyte [Block copolymer 2]

A block copolymer 2 (IEC=2.4 meq/g, Mw= 333,000, Mn=147,000 [mobile phase 1]) having the hydrophilic block including the repeating units represented by the following formula: 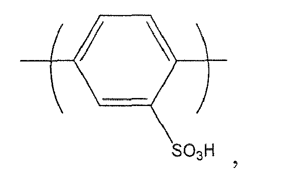 and the hydrophobic block represented by the following formula: 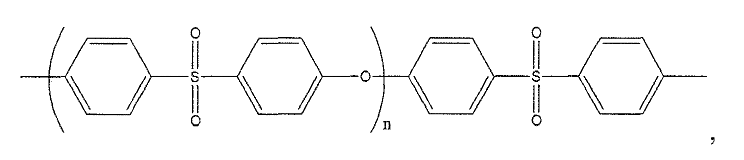 as synthesized by using SUMIKAEXCEL PES 5200P (manufactured by Sumitomo Chemical Co., Ltd.) with reference to the method described in Examples 7 and 21 of WO2007/043274.

### (Reference Example 1) Preparation of model polymer

A model polymer having a block including the structural unit represented by the following formula: 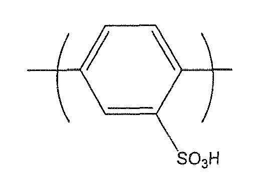 was prepared with reference to the method described in Examples 1 and 2 of JP-2005-248143-A.

By using the model polymer, an experiment on solubility at 25°C was performed, in which the solvent described below was proved to be a good solvent of the model polymer, that is, a good solvent of the block having ion-exchange group (hydrophilic block) in the block copolymer 1 obtained in Synthesis Example 1, or a good solvent of the block having ion-exchange group (hydrophilic block) in the block copolymer 2 obtained in Synthesis Example 2.
Formamide: A solubility of 0.5% by weight or more was shown.
Glycerin: A solubility of 0.5% by weight or more was shown.

Ethylene glycol: A solubility of 0.5% by weight or more was shown.
Methanol: A solubility of 0.5% by weight or more was shown.
Ethanol: A solubility of 0.5% by weight or more was shown.
Diethylene glycol: A solubility of 0.5% by weight or more was shown.

### (Reference Example 2)

Also, by using the block copolymer 1 obtained in Synthesis Example 1 and the block copolymer 2 obtained in Synthesis Example 2, experiments on solubility at 25°C were performed, and as a result, the solvents shown below were proved to poor solvents of the block copolymer 1 and the block copolymer 2.
Formamide: Not completely dissolved at a concentration of 0.05% by weight.
Glycerin: Not completely dissolved at a concentration of 0.05% by weight.
Ethylene glycol: Not completely dissolved at a concentration of 0.05% by weight.
Methanol: Not completely dissolved at a concentration of 0.05% by weight.
Ethanol: Not completely dissolved at a concentration of 0.05% by weight.
Diethylene glycol: Not completely dissolved at a concentration of 0.05% by weight.

### (Membrane Formation Condition 1)

The membrane formation by a solution casting method was carried out using a continuous membrane-forming device. That is, the polymer electrolyte composition was continuously applied (with casting method) to a supporting substrate (polyethylene terephthalate film (E5000 grade, manufactured by Toyobo Co., Ltd.) having a width of 300 mm and a length of 30 m), which was continuously run, while maintaining the membrane thickness using a variable doctor blade to a desired membrane thickness, the laminate formed with the coat/supporting substrate was continuously fed to a drying furnace and dried in the drying furnace to remove substantially all of the solvent from the coat. The drying conditions of the drying furnace are reported below.

Drying conditions: Temperature 90°C, time 33 minutes.

(Further, the temperature indicates the temperature set in the drying furnace, and the time indicates the time passing from the time point when the laminate of the coat/supporting substrate came into the drying furnace to the time point when the laminate came out of the drying furnace.)

The polymer electrolyte membrane after the drying was washed with ion-exchange water to remove the solvent completely. This membrane was immersed in 2 N sulfuric acid for 2 hours, then washed again with ion-exchange water, and further dried with air to prepare a polymer electrolyte membrane.

### Example 1

Dimethyl sulfoxide and formamide were mixed at a weight ratio of 97.0 to 3.0, and stirred at room temperature for 5 minutes to prepare a uniform mixed solvent. The block copolymer 1 obtained in Synthesis Example 1 was dissolved in the mixed solvent to prepare a solution 1 having a concentration of the block copolymer 1 of 8.5% by weight. A polymer electrolyte membrane was prepared using this solution 1 by a solution cast method. A polymer electrolyte membrane 1 having a membrane thickness of about 20 µm was prepared by using, as a supporting substrate, a polyethylene terephthalate (E5000 grade, manufactured by Toyobo Co., Ltd.) having a width of 300 mm and a length of 30 m by the method of the membrane formation condition 1. Further, in the membrane formation condition 1, it was confirmed by measurement using gas chromatography that formamide remained in the coat on the supporting substrate after passing through the drying furnace.

The IEC of the obtained polymer electrolyte membrane 1 was 2.3 meq/g. In addition, the proton conductivity and the water absorption ratio of the polymer electrolyte membrane 1 were measured. The results are shown in Table 2.

(Further, dimethyl sulfoxide was a good solvent of the block copolymer 1.)

### Example 2

Dimethyl sulfoxide and formamide were mixed at a weight ratio of 99.5 to 0.5, and stirred at room temperature for 5 minutes to prepare a uniform mixed solvent. The block copolymer 1 obtained in Synthesis Example 1 was dissolved in the mixed solvent to prepare a solution 2 having a concentration of the block copolymer 1 of 8.5% by weight. A polymer electrolyte membrane 2 was obtained by the same method as in Example 1 except that the solution 2 was used instead of the solution 1. Further, in the membrane formation condition 1, it was confirmed by measurement using gas chromatography that formamide remained in the coat on the supporting substrate after passing through the drying furnace.

The IEC of the obtained polymer electrolyte membrane 2 was 2.3 meq/g. In addition, the proton conductivity and the water absorption ratio of the polymer electrolyte membrane 2 were measured. The results are shown in Table 2.

### Example 3

Dimethyl sulfoxide and glycerin were mixed at a weight ratio of 97.0 to 3.0, and stirred at room temperature for 5 minutes to prepare a uniform mixed solvent. The block copolymer 1 obtained in Synthesis Example t was dissolved in the mixed solvent to prepare a solution 3 having a concentration of the block copolymer 1 of 8.5% by weight. A polymer electrolyte membrane 3 was obtained by the same method as in Example 1 except that the solution 3 was used instead of the solution 1. Further, in the membrane formation condition 1, it was confirmed by measurement using gas chromatography that glycerin remained in the coat on the supporting substrate after passing through the drying furnace.

The IEC of the obtained polymer electrolyte membrane 3 was 2.3 meq/g. In addition, the proton conductivity and the water absorption ratio of the polymer electrolyte membrane 3 were measured. The results are shown in Table 2.

### Example 4

Dimethyl sulfoxide and glycerin were mixed at a weight ratio of 99.0 to 1.0, and stirred at room temperature for 5 minutes to prepare a uniform mixed solvent. The block copolymer 1 obtained in Synthesis Example 1 was dissolved in the mixed solvent to prepare a solution 4 having a concentration of the block copolymer 1 of 8.5% by weight. A polymer electrolyte membrane 4 was obtained by the same method as in Example 1 except that the solution 4 was used instead of the solution 1. Further, in the membrane formation condition 1, it was confirmed by measurement using gas chromatography that glycerin remained in the coat on the supporting substrate after passing through the drying furnace.

The IEC of the obtained polymer electrolyte membrane 4 was 2.3 meq/g. In addition, the proton conductivity and the water absorption ratio of the polymer electrolyte membrane 4 were measured. The results are shown in Table 2.

### Example 5

Dimethyl sulfoxide and ethylene glycol were mixed at a weight ratio of 97.0 to 3.0, and stirred at room temperature for 5 minutes to prepare a uniform mixed solvent. The block copolymer 1 obtained in Synthesis Example 1 was dissolved in the mixed solvent to prepare a solution 5 having a concentration of the block copolymer 1 of 8.5% by weight. A polymer electrolyte membrane 5 was obtained by the same method as in Example 1 except that the solution 5 was used instead of the solution 1. Further, in the membrane formation condition 1, it was confirmed by measurement using gas chromatography that ethylene glycol remained in the coat on the supporting substrate after passing through the drying furnace.

The IEC of the obtained polymer electrolyte membrane 5 was 2.3 meq/g. In addition, the proton conductivity and the water absorption ratio of the polymer electrolyte membrane 5 were measured. The results are shown in Table 2.

### Example 6

Dimethyl sulfoxide and ethylene glycol were mixed at a weight ratio of 99.0 to 1.0, and stirred at room temperature for 5 minutes to prepare a uniform mixed solvent. The block copolymer 1 obtained in Synthesis Example 1 was dissolved in the mixed solvent to prepare a solution 6 having a concentration of the block copolymer 1 of 8.5% by weight. A polymer electrolyte membrane 6 was obtained by the same method as in Example 1 except that the solution 6 was used instead of the solution 1. Further, in the membrane formation condition 1, it was confirmed by measurement using gas chromatography that ethylene glycol remained in the coat on the supporting substrate after passing through the drying furnace.

The IEC of the obtained polymer electrolyte membrane 6 was 2.3 meq/g. In addition, the proton conductivity and the water absorption ratio of the polymer electrolyte membrane 6 were measured. The results are shown in Table 2.

### Comparative Example 1

The block copolymer 1 obtained in Synthesis Example 1 was dissolved in dimethyl sulfoxide to prepare a solution 7 having a concentration of the block copolymer 1 of 8.5% by weight. A polymer electrolyte membrane 7 was obtained by the same method as in Example 1 except that the solution 7 was used instead of the solution 1. The IEC of the obtained polymer electrolyte membrane 7 was 2.3 meq/g. In addition, the proton conductivity and the water absorption ratio of the polymer electrolyte membrane 7 were measured. The results are shown in Table 2.

### Comparative Example 2

Dimethyl sulfoxide and methanol were mixed at a weight ratio of 90.0 to 10.0, and stirred at room temperature for 5 minutes to prepare a uniform mixed solvent. The block copolymer 1 obtained in Synthesis Example 1 was dissolved in the mixed solvent to prepare a solution 8 having a concentration of the block copolymer 1 of 8.5% by weight. A polymer electrolyte membrane 8 was obtained by the same method as in Example 1 except that the solution 8 was used instead of the solution 1. Further, in the membrane formation condition 1, by measurement using gas chromatography, methanol remained in the coat on the supporting substrate after passing through the drying furnace.

The IEC of the obtained polymer electrolyte membrane 8 was 2.3 meq/g. In addition, the proton conductivity and the water absorption ratio of the polymer electrolyte membrane 8 were measured. The results are shown in Table 2.

### Example 7

N-Methyl-2-pyrrolidone and glycerin were mixed at a weight ratio of 93.0 to 7.0, and stirred at room temperature for 5 minutes to prepare a uniform mixed solvent. The block copolymer 1 obtained in Synthesis Example 1 was dissolved in the mixed solvent to prepare a solution 9 having a concentration of the block copolymer 1 of 8.5% by weight. A polymer electrolyte membrane 9 was obtained by the same method as in Example 1 except that the solution 9 was used instead of the solution 1. Further, in the membrane formation condition 1, it was confirmed by measurement using gas chromatography that glycerin remained in the coat on the supporting substrate after passing through the drying furnace.

The IEC of the obtained polymer electrolyte membrane 9 was 2.3 meq/g. In addition, the proton conductivity and the water absorption ratio of the polymer electrolyte membrane 9 were measured. The results are shown in Table 2.

(Further, N-methyl-2-pyrrolidone was a good solvent of the block copolymer 1.)

### Comparative Example 3

The block copolymer 1 obtained in Synthesis Example 1 was dissolved in N-methyl-2-pyrrolidone to prepare a solution 10 having a concentration of the block copolymer 1 of 8.5% by weight. A polymer electrolyte membrane 10 was obtained by the same method as in Example 1 except that the solution 10 was used instead of the solution 1.

The IEC of the obtained polymer electrolyte membrane 10 was 2.3 meq/g. In addition, the proton conductivity and the water absorption ratio of the polymer electrolyte membrane 10 were measured. The results are shown in Table 2.

### Comparative Example 4

N-Methyl-2-pyrrolidone and methanol were mixed at a weight ratio of 90.0 to 10.0, and stirred at room temperature for 5 minutes to prepare a uniform mixed solvent. The block copolymer 1 obtained in Synthesis Example 1 was dissolved in the mixed solvent to prepare a solution 11 having a concentration of the block copolymer 1 of 8.5% by weight. A polymer electrolyte membrane 11 was obtained by the same method as in Example 1 except that the solution 11 was used instead of the solution 1. Further, in the membrane formation condition 1, it was confirmed by measurement using gas chromatography that ethanol remained in the coat on the supporting substrate after passing through the drying furnace.

The IEC of the obtained polymer electrolyte membrane 11 was 2.3 meq/g. In addition, the proton conductivity and the water absorption ratio of the polymer electrolyte membrane 11 were measured. The results are shown in Table 2.

### Comparative Example 5

N-Methyl-2-pyrrolidone and ethanol were mixed at a weight ratio of 90.0 to 10.0, and stirred at room temperature for 5 minutes to prepare a uniform mixed solvent. The block copolymer 1 obtained in Synthesis Examples 1 was dissolved in the mixed solvent to prepare a solution 12 having a concentration of the block copolymer 1 of 8.5% by weight. A polymer electrolyte membrane 12 was obtained by the same method as in Example 1 except that the solution 12 was used instead of the solution 1. Further, in the membrane formation condition 1, it was confirmed by measurement using gas chromatography that ethanol remained in the coat on the supporting substrate after passing through the drying furnace.

The IEC of the obtained polymer electrolyte membrane 12 was 2.3 meq/g. In addition, the proton conductivity and the water absorption ratio of the polymer electrolyte membrane 12 were measured. The results are shown in Table 2.

### Example 8

N-Methyl-2-pyrrolidone and formamide were mixed at a weight ratio of 80.0 to 20.0, and stirred at room temperature for 5 minutes to prepare a uniform mixed solvent. The block copolymer 2 obtained in Synthesis Example 2 was dissolved in the mixed solvent to prepare a solution 13 having a concentration of the block copolymer 2 of 8.0% by weight. A polymer electrolyte membrane 13 was obtained by the same method as in Example 1 except that the solution 13 was used instead of the solution 1. Further, in the membrane formation condition 1, it was confirmed by measurement using gas chromatography that formamide remained in the coat on the supporting substrate after passing through the drying furnace.

The IEC of the obtained polymer electrolyte membrane 13 was 2.4 meq/g. In addition, the proton conductivity and the water absorption ratio of the polymer electrolyte membrane 13 were measured. The results are shown in Table 2.

(Further, N-methyl-2-pyrrolidone was a good solvent of the block copolymer 2.)

### Example 9

N-Methyl-2-pyrrolidone and glycerin were mixed at a weight ratio of 93.0 to 7.0, and stirred at room temperature for 5 minutes to prepare a uniform mixed solvent. The block copolymer 2 obtained in Synthesis Example 2 was dissolved in the mixed solvent to prepare a solution 14 having a concentration of the block copolymer 2 of 8.0% by weight. A polymer electrolyte membrane 14 was obtained by the same method as in Example 1 except that the solution 14 was used instead of the solution 1. Further, in the membrane formation condition 1, it was confirmed by measurement using gas chromatography that glycerin remained in the coat on the supporting substrate after passing through the drying furnace.

The IEC of the obtained polymer electrolyte membrane 14 was 2.4 meq/g. In addition, the proton conductivity and the water absorption ratio of the polymer electrolyte membrane 14 were measured. The results are shown in Table 2.

### Example 10

N-Methyl-2-pyrrolidone and diethylene glycol were mixed at a weight ratio of 90.0 to 10.0, and stirred at room temperature for 5 minutes to prepare a uniform mixed solvent. The block copolymer 2 obtained in Synthesis Example 2 was dissolved in the mixed solvent to prepare a solution 15 having a concentration of the block copolymer 2 of 8.0% by weight. A polymer electrolyte membrane 15 was obtained by the same method as in Example 1 except that the solution 15 was used instead of the solution 1. Further, in the membrane formation condition 1, it was confirmed by measurement using gas chromatography that glycerin remained in the coat on the supporting substrate after passing through the drying furnace.

The IEC of the obtained polymer electrolyte membrane 15 was 2.4 meq/g. In addition, the proton conductivity and the water absorption ratio of the polymer electrolyte membrane 15 were measured. The results are shown in Table 2.

### Comparative Example 6

The block copolymer 2 obtained in Synthesis Example 2 was dissolved in N-methyl-2-pyrrolidone to prepare a solution 16 having a concentration of the block copolymer 2 of 8.0% by weight. A polymer electrolyte membrane 16 was obtained by the same method as in Example 1 except that the solution 16 was used instead of the solution 1.

The IEC of the obtained polymer electrolyte membrane 16 was 2.4 meq/g. In addition, the proton conductivity and the water absorption ratio of the polymer electrolyte membrane 16 were measured. The results are shown in Table 2.

### Example 11

N,N-Dimethylacetamide and formamide were mixed at a weight ratio of 95.0 to 5.0, and stirred at room temperature for 5 minutes to prepare a uniform mixed solvent. The block copolymer 1 obtained in Synthesis Example 1 was dissolved in the mixed solvent to prepare a solution 17 having a concentration of the block copolymer 1 of 8.5% by weight. A polymer electrolyte membrane 17 was obtained by the same method as in Example 1 except that the solution 17 was used instead of the solution 1.

The IEC of the obtained polymer electrolyte membrane 17 was 2.3 meq/g. In addition, in the membrane formation condition 1, it was confirmed by measurement using gas chromatography that formamide remained in the coat on the supporting substrate after passing through the drying furnace.

The proton conductivity and the water absorption ratio of the obtained polymer electrolyte membrane 17 were measured. The results are shown in Table 2.

(Further, N,N-dimethylacetamide was a good solvent of the block copolymer 1.)

### Comparative Example 7

The block copolymer 1 obtained in Synthesis Example 1 was dissolved in N,N-dimethylacetamide to prepare a solution 18 having a concentration of the block copolymer 1 of 8.5% by weight. A polymer electrolyte membrane 18 was obtained by the same method as in Example 1 except that the solution 18 was used instead of the solution 1.

The IEC of the obtained polymer electrolyte membrane 18 was 2.3 meq/g. In addition, the proton conductivity and the water absorption ratio of the polymer electrolyte membrane 18 were measured. The results are shown in Table 2.

### Comparative Example 8

N,N-Dimethylacetamide and methanol were mixed at a weight ratio of 95.0 to 5.0, and stirred at room temperature for 5 minutes to prepare a uniform mixed solvent. The block copolymer 1 obtained in Synthesis Example 1 was dissolved in the mixed solvent to prepare a solution 19 having a concentration of the block copolymer 1 of 8.5% by weight. A polymer electrolyte membrane 19 was obtained by the same method as in Example 1 except that the solution 19 was used instead of the solution 1.

The IEC of the obtained polymer electrolyte membrane 19 was 2.3 meq/g. In addition, the proton conductivity and the water absorption ratio of the polymer electrolyte membrane 19 were measured. The results are shown in Table 2.

**Table 2**

| | Block copolymer-type polymer electrolyte | Compositional ratio of solvent in mixed solution (weight % *) | | Physical properties of membrane | |
|---|---|---|---|---|---|
| | | Solvent A | Solvent B | Ion conductivity (S/cm) | Water absorption ratio (%) |
| Ex. 1 | Block copolymers 1 | Formamide 3 | Dimethyl sulfoxide 97 | 0.12 | 160 |
| Ex. 2 | Block copolymer 1 | Formamide 0.5 | Dimethyl sulfoxide 99.5 | 0.096 | 130 |
| Ex. 3 | Block copolymer 1 | Glycerin 3 | Dimethyl sulfoxide 97 | 0.14 | 350 |
| Ex. 4 | Block copolymer 1 | Glycerin 1 | Dimethyl sulfoxide 99 | 0.1 | 170 |
| Ex. 5 | Block copolymer 1 | Ethylene glycol 3 | Dimethyl sulfoxide 97 | 0.11 | 220 |
| Ex. 6 | Block copolymer 1 | Ethylene glycol 1 | Dimethyl sulfoxide 99 | 0.1 | 160 |
| Comp. Ex. 1 | Block copolymer 1 | | Dimethyl sulfoxide 100 | 0.077 | 120 |
| Comp. Ex. 2 | Block copolymers 1 | Methanol 10 | Dimethyl sulfoxide 90 | 0.082 | 100 |
| Ex. 7 | Block copolymer 1 | Glycerin 7 | N-Methyl-2-pyrrolidone 93 | 0.11 | 160 |
| Camp. Ex. 3 | Block copolymer 1 | | N-Methyl-2-pyrrolidone 100 | 0.028 | 73 |
| Comp. Ex. 4 | Block copolymer 1 | Methanol 10 | N-Methyl-2-pyrrolidone 90 | 0.028 | 73 |
| Comp. Ex. 5 | Block copolymer 1 | Ethanol 10 | N-Methyl-2-pyrrolidone 90 | 0.024 | 74 |
| Ex. 8 | Block copolymer 2 | Formamide 20 | N-Methyl-2-pyrrolidone 80 | 0.13 | 160 |
| Ex. 9 | Block copolymer 2 | Glycerin 7 | N-Methyl-2-pyrrolidone 93 | 0.098 | 200 |
| Ex. 10 | Block copolymer 2 | Diethylene glycol 10 | N-Methyl-2-pyrrolidone 90 | 0.07 | 172 |
| Comp. Ex. 6 | Block copolymer 2 | | N-Methyl-2-pyrrolidone 100 | 0.02 | 71 |
| Ex. 11 | Block copolymer 1 | Formamide 5 | N,N-Dimethylacetamide 95 | 0.103 | 180 |
| Comp. Ex. 7 | Block copolymer 1 | | N,N-Dimethylacetamide 100 | 0.007 | 70 |
| Comp. Ex. 8 | Block copolymer 1 | Methanol 5 | N,N-Dimethylacetamide 95 | 0.002 | 62 |

| | | | | | |
|---|---|---|---|---|---|
| * Weight ratios of the respective solvents when the total weight of the mixed solvent was taken as 100% by weight. | | | | | |

It was proved that polymer electrolyte membranes having excellent physical properties of the membrane in which the polymer electrolyte compositions including the solvent A and the solvent B, which are a suitable polymer electrolyte composition of the present invention (Examples 1 to 11) exhibit a high degree of ion conductivity and have a practical water absorption ratio so as to give good water absorption dimensional stability are obtained.

Further, with respect to the polymer electrolyte compositions not using the solvent A which is a poor solvent of the block copolymer-type polymer electrolyte as well as a good solvent of the block having the ion-exchange group (Comparative Examples 1, 3, 6, and 7), and the polymer electrolyte compositions formed by using methanol or ethanol as a solvent which is a poor solvent of the block copolymer-type polymer electrolyte as well as a good solvent of the block having the ion-exchange group, but has a lower boiling point than that of the solvent B (Comparative Examples 2, 4, 5, and 8), the obtained polymer electrolyte membrane had less ion conductivity.

### Industrial Applicability

According to the present invention, a polymer electrolyte membrane which exhibits a higher degree of the ion conductivity while maintaining a practically sufficient water absorption ratio can be obtained. The polymer electrolyte membrane can be easily prepared by a solution cast method and extremely is useful as a diaphragm for a fuel cell, which thus has a high industrial value.

## Claims

1. A polymer electrolyte composition comprising:
a mixed solvent including a plurality of solvents with boiling points differing from one another, and
a block copolymer-type polymer electrolyte comprising a block having an ion-exchange group and a block having substantially no ion-exchange groups,
wherein the mixed solvent is a good solvent of the block copolymer-type polymer electrolyte, and
a solvent A having the highest boiling point of the solvents included in the mixed solvent is a poor solvent of the block copolymer-type polymer electrolyte and good solvent of the block having the ion-exchange group.

2. The polymer electrolyte composition according to claim 1, wherein the mixed solvent contains, in addition to the solvent A, a solvent B which is a good solvent of the block copolymer-type polymer electrolyte.

3. The polymer electrolyte composition according to claim 2, wherein the difference in boiling point between the solvent A and the solvent B is 5°C or more.

4. The polymer electrolyte composition according to claim 2, wherein the content weight ratio of the solvent A to the solvent B, as represented by solvent A/solvent B, is in the range from 0.1/99.9 to 50.0/50.0.

5. The Polymer electrolyte composition according to claim 2, wherein the ratio of the sum of the weights of the solvent A and the solvent B with respect to the total weight of the mixed solvent is 50% by weight or more.

6. The polymer electrolyte composition according to claim 1, wherein the mixed solvent contains substantially no water.

7. The polymer electrolyte composition according to claim 1, wherein the block copolymer-type polymer electrolyte has as the block having an ion-exchange group, a block represented by the following formula (1a): 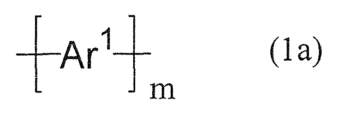 wherein m represents an integer of 5 or more; Ar¹ represents a divalent aromatic group, which may be substituted with a fluorine atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acyl group having 2 to 20 carbon atoms which may have a substituent; Ar¹ has an ion-exchange group bonding to an aromatic ring constituting the main chain directly or a a divalent hydrocarbon group, and
as the block having substantially no ion-exchange groups, a block represented by the following formula (1b), (2b), or (3b): 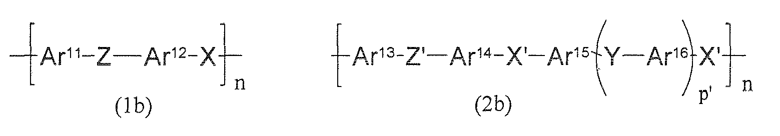 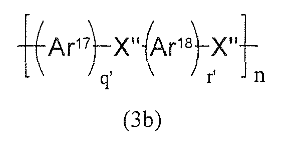 wherein n represents an integer of 5 or more; Ar¹¹ to Ar¹⁸ each independently represents a divalent aromatic group, which may be substituted with an alkyl group having 1 to 10 carbon atoms, an alkoxy group having 1 to 10 carbon atoms, an aryl group having 6 to 10 carbon atoms, an aryloxy group having 6 to 18 carbon atoms, or an acyl group having 2 to 20 carbon atoms; Z and Z' each independently represents a carbonyl group or a sulfonyl group, and X, X', and X" each independently represents an oxy group or a thioxy group; Y represents a direct bond or a group represented by the following formula (1c); p' represents 0, 1, or 2, and in the case where p' is 2, the two of Ar^{1b} and the two of Y may be the same as or different from each other; q' and r' each independently represents 1, 2, or 3; in the case where q' is 2 or more, a plurality of Ar¹⁷ may be the same as or different from each other; and in the case where r' is 2 or more, a plurality of Ar¹⁸ may be the same as or different from each other; 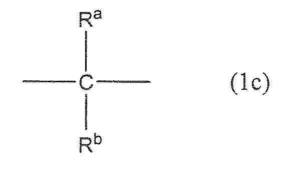 wherein and R^{b} each independently represents a hydrogen atom, an alkyl group having 1 to 10 carbon atoms which may have a substituent, an alkoxy group having 1 to 10 carbon atoms which may have a substituent, an aryl group having 6 to 18 carbon atoms which may have a substituent, an aryloxy group having 6 to 18 carbon atoms which may have a substituent, or an acryl group having 2 to 20 carbon atoms which may have a substituent, and R^{a} and R^{b} may be linked to form a ring together with the carbon atom to which they attach.

8. The polymer electrolyte composition according to claim 7, wherein the block copolymer-type polymer electrolyte has a block represented by the formula (1a) as the block having an ion-exchange group, and
Ar¹ of the block is a divalent aromatic group in which the ion-exchange group is directly bonded to the aromatic ring constituting the main chain.

9. The polymer electrolyte composition according to claim 1, wherein the block copolymer-type polymer electrolyte is a block copolymer-type polymer electrolyte having substantially no halogen atoms.

10. A method for preparing the polymer electrolyte composition according to any one of claims 1 to 9, the method comprising:
a preparation step of preparing the mixed solvent including the solvent A, and
a dissolution step of dissolving the block copolymer-type polymer electrolyte in the mixed solvent obtained in the preparation step.

11. A polymer electrolyte membrane prepared using the polymer electrolyte composition according to any one of claims 1 to 9.

12. The polymer electrolyte membrane according to claim 11, which has a microphase-separated structure comprising a phase in which the density of the block having the ion-excllange group is higher than that of the block having substantially no ion-exchange groups and a phase in which the density of the block having substantially no ion-exchange groups is higher than that of the block having ion-exchange group.

13. A method for preparing a polymer electrolyte membrane, the method comprising:
a drying step of applying the polymer electrolyte composition according to any one of claims 1 to 9 to a supporting substrate to prepare a coat, and drying the coat so that the solvent A may remain in the coat, and
a washing step of removing the solvent A remaining in the coat resulting from the drying step by washing with a washing solvent.

14. A membrane-electrode assembly comprising the polymer electrolyte membrane according to claim 11.

15. A solid polymer-type fuel cell comprising the membrane-electrode assembly according to claim 14.
